# EUROPÄISCHE PATENTSCHRIFT

(11) **EP 1 410 963 B1**
(45) Veröffentlichungstag und Bekanntmachung des Hinweises auf die Patenterteilung: **16.11.2005**
(21) Anmeldenummer: 03020420.0
(22) Anmeldetag: 11.09.2003
(51) Int. Cl.: B60R 25/02

(54) **Vorrichtung zum Sperren der Lenkspindel eines Kraftfahrzeugs**
Device for locking the steering spindle of a motor vehicle
Dispositif de blocage de l'arbre de direction d'un véhicule automobile

(30) Priorität: 14.10.2002 DE 10247803
(43) Veröffentlichungstag der Anmeldung: 21.04.2004
(73) Patentinhaber: Huf Hülsbeck & Fürst GmbH & Co. KG, 42551 Velbert (DE)
(72) Erfinder: Zillmann,Horst, 81243 München (DE)
(74) Vertreter: Oedekoven, Wolf Dieter

(56) Entgegenhaltungen:
- EP-A- 0 953 487
- EP-A- 0 995 648
- DE-A- 10 103 182
- DE-C- 19 614 436
- DE-U- 9 208 698
- FR-A- 2 777 521

## Beschreibung

Die Erfindung bezieht sich auf eine Vorrichtung zum Sperren der Lenkspindel eines Kraftfahrzeugs gegen Drehen mittels eines in einem Gehäuse zwischen einer Sperrstellung und einer Freigabestellung axial hin- und herbewegbaren Sperrbolzens, welcher in der Sperrstellung mittels eines mit einer seitlichen Vertiefung des Sperrbolzens zusammenwirkenden, im Gehäuse axial verschieblich gelagerten, federbelasteten Sicherungsstiftes bei Entfernung eines mit einem Arm zum Rückhalten des Sicherungsstiftes entgegen der Wirkung seiner Federbelastung versehenen Teils des Gehäuses und Freigabe des Sicherungsstiftes durch den Rückhaltearm blockierbar ist.

Derartige Vorrichtungen zur Verriegelung der Lenkspindel von Kraftfahrzeugen, so daß sie nicht mehr gedreht werden kann, bei welchen der Sperrbolzen in seiner Verriegelungs- oder Sperrstellung mit Hilfe eines mit einer seitlichen Vertiefung des Sperrbolzens zusammenwirkenden, im Gehäuse axial verschieblich gelagerten, federbelasteten Sicherungsstiftes blockiert wird, wenn ein Teil des Gehäuses abgebrochen wird, sind in verschiedenen Ausgestaltungen bekannt.

Dazu gehört ein Lenkschloß für Kraftfahrzeuge, bei dem der Sicherungsstift einen mittleren Schaft und einen runden Kopf zum Eingriff in die seitliche Vertiefung des Sperrbolzens am einen Ende des Schaftes sowie einen quer gerichteten Fuß am anderen Ende des Schaftes aufweist, verschwenkbar ist und mit dem Fuß einerseits mit einer Halteschulter des Gehäuses und andererseits mit einem im Gehäuse axial verschieblichen Halteschieber zusammenwirkt. Der Sicherungsstift ist durch eine Schraubendruckfeder belastet, welche sich einerseits am Sicherungsstift und andererseits am Halteschieber abstützt. Der Halteschieber wirkt an dem dem Sicherungsstift abgewandten Ende mit dem den Lenkschloßschließzylinder umschließenden Gehäuseteil zusammen, um sich beim Abbrechen dieses Gehäuseteils unter der Wirkung der Schraubendruckfeder gegen einen gehäusefesten Anschlag zu verschieber und den Sicherungsstift freizugeben, so daß er unter der Wirkung der Schraubendruckfeder von der Halteschulter des Gehäuses wegschwenkt und axia in Eingriff mit der seitlichen Vertiefung des Sperrbolzens läuft (EP 0 953 487 A1).

Ferner gehören dazu Kraftfahrzeug-Lenkschlösser, bei denen der Sicherungsstift durch einen im Gehäuse parallel zum Sperrbolzen axial verschieblich gelagerten Rückhaltedraht oder Rückhaltestift entgegen der Wirkung seiner Federbelastung abgestützt ist, welcher an seinem sicherungsstiftfernen Ende mit dem Lenkschloß-Schließzylinder oder dem mit dessen Zylinderkern verbundenen Sperrbolzen-Steuernocken zusammenwirkt, um sich beim
Abbrechen des den Schließzylinder und gegebenenfalls den Steuernocken umschließenden Gehäuseteils axial zu verschieben und den Sicherungsstift freizugeben, so daß er unter der Wirkung seiner Federbelastung in Eingriff mit der seitlichen Vertiefung des Sperrbolzens läuft (DE 31 31 558 C1, DE 92 08 698 U1).

Auch gehört dazu eine Vorrichtung zum Sperren der Lenkspindel eines Kraftfahrzeugs gegen Drehen der eingangs angegebenen Art, bei der also der Sicherungsstift durch einen innen vom Gehäuse abstehenden Rückhaltearm entgegen der Wirkung seiner Federbelastung abgestützt ist und dann vom Rückhaltearm freigegeben wird, um unter der Wirkung seiner Federbelastung in Eingriff mit der seitlichen Vertiefung des Sperrbolzens zu laufen, wenn der mit dem Rückhaltearm versehene Teil des Gehäuses entfernt wird. Der Sicherungsstift ist an seinem sperrbolzenfernen Ende durch eine Schraubendruckfeder belastet und an seinem sperrbolzennahen Ende durch den Rückhaltearm abgestützt (DE 100 41 984 A1).

Bekannt ist weiterhin ein Lenkschloß für Kraftfahrzeuge zum Sperren der Lenkspindel des jeweiligen Kraftfahrzeugs gegen Drehen mittels eines Sperrbolzens, welcher mit Hilfe eines Schließzylinders zwischen einer Sperrstellung und einer Freigabestellung axial hin- und herbewegbar und ebenso wie der Schließzylinder in einem Gehäuse angeordnet ist, das eine durch eine Abdeckplatte verschlossene Montageöffnung aufweist, wobei die Abdeckplatte am Gehäuse befestigt, beispielsweise verstemmt, und mittels eines Blechstreifens riegelartig gesichert ist, welcher sich parallel zur Schließzylinderlängsachse erstreckt, in einer Führungsnut des Gehäuses aufgenommen ist und in eine Ausnehmung einer Abkröpfung der Abdeckplatte derart eingreift, daß der Blechstreifen nicht aus der Ausnehmung herausgezogen werden kann. Der Blechstreifen kann ferner mit einem im Gehäuse axial verschieblich gelagerten, federbelasteten Sicherungsstift zusammenwirken, um den Sicherungsstift entgegen der Wirkung seiner Federbelastung abzustützen und dann freizugeben, so daß er unter der Wirkung seiner Federbelastung in Eingriff mit einer seitlichen Vertiefung des Sperrbolzens läuft und den Sperrbolzen in seiner Sperrstellung blockiert, wenn der Blechstreifen beim Herausreißen oder Abbrechen des Schließzylinders bricht oder wenn die Abdeckplatte angehoben wird (DE 196 14 436 C1).

Der Erfindung liegt die Aufgabe zugrunde, eine Vorrichtung der eingangs angegeben Art zu schaffen, bei welcher der Sicherungsstift nach dem Blockieren des Sperrbolzens unerreichbar ist, um außer Eingriff mit der Vertiefung des Sperrbolzens bewegt zu werden.

Diese Aufgabe ist erfindungsgemäß durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Nachstehend ist eine Ausführungsform der erfindungsgemäßen Vorrichtung zum Sperren der Lenkspindel eines Kraftfahrzeugs anhand von Zeichnungen beispielsweise beschrieben. Darin zeigt :
Fig. 1 die Draufsicht in Richtung des Pfeils I in Fig. 4;
Fig. 2 den Längsschnitt entlang der Linie II - II in Fig. 1 in größerem Maßstab und ohne Elektromotor, wobei das Sperrglied sich in seiner Freigabestellung befindet;
Fig. 3 den Längsschnitt gemäß Fig. 2, wobei das Sperrglied sich in seiner Sperrstellung befindet;
Fig. 4 den Längsschnitt gemäß Fig. 3, wobei der Verschlußdeckel entfernt und das Sperrglied in seiner Sperrstellung blockiert ist.

Die dargestellte Vorrichtung zum Sperren der Lenkspindel 1 eines Kraftfahrzeugs gegen Drehen weist einen Sperrbolzen 2 auf, welcher mit einer auf der Lenkspindel 1 befestigten Sperrhülse 3 mit Sperrnuten 4 zusammenwirkt. Die Lenkspindel 1 und die Sperrhülse 3 sind von einem nicht wiedergegebenen Mantelrohr mit einer Durchgangsöffnung für den Sperrbolzen 2 umschlossen.

Der Sperrbolzen 2 weist einen rechteckigen Querschnitt auf und ist in einem Kanal 5 entsprechenden Querschnitts eines Gehäuses 6 axial verschieblich gelagert, dessen Längsachse 7 die gemeinsame Längsachse 8 der Lenkspindel 1 und des dazu koaxialen Mantelrohres rechtwinklig schneidet. Das Gehäuse 6 ist auf der der Lenkspindel 1 und dem Mantelrohr abgewandten Seite mit einer durch einen Deckel 9 verschlossenen Montageöffnung 10 versehen und am Mantelrohr befestigt.

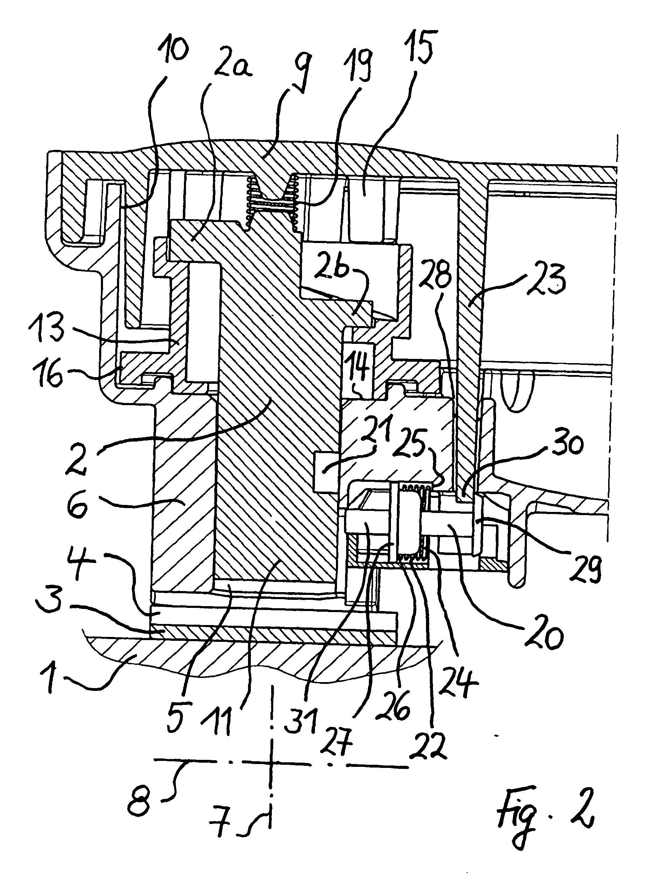

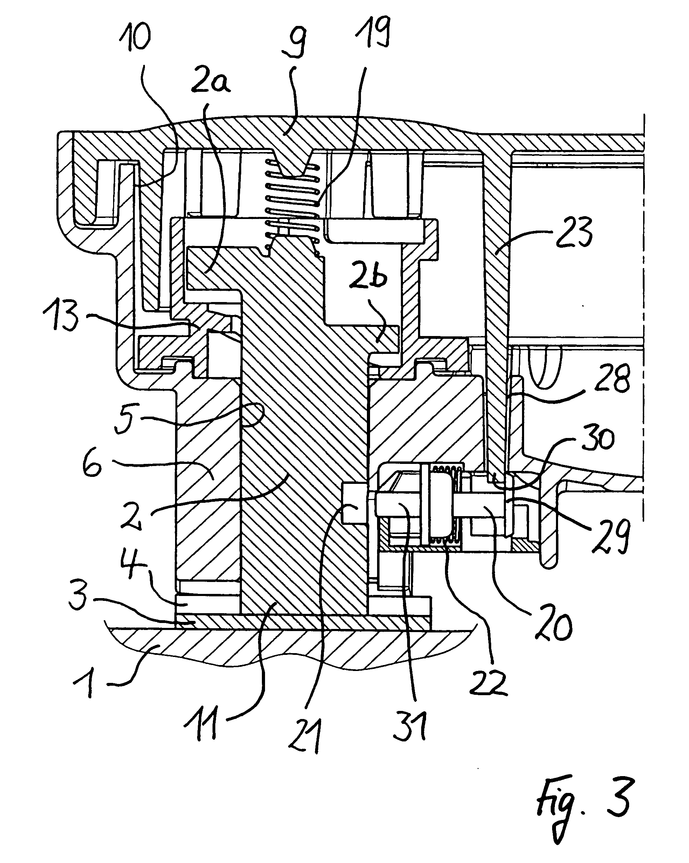

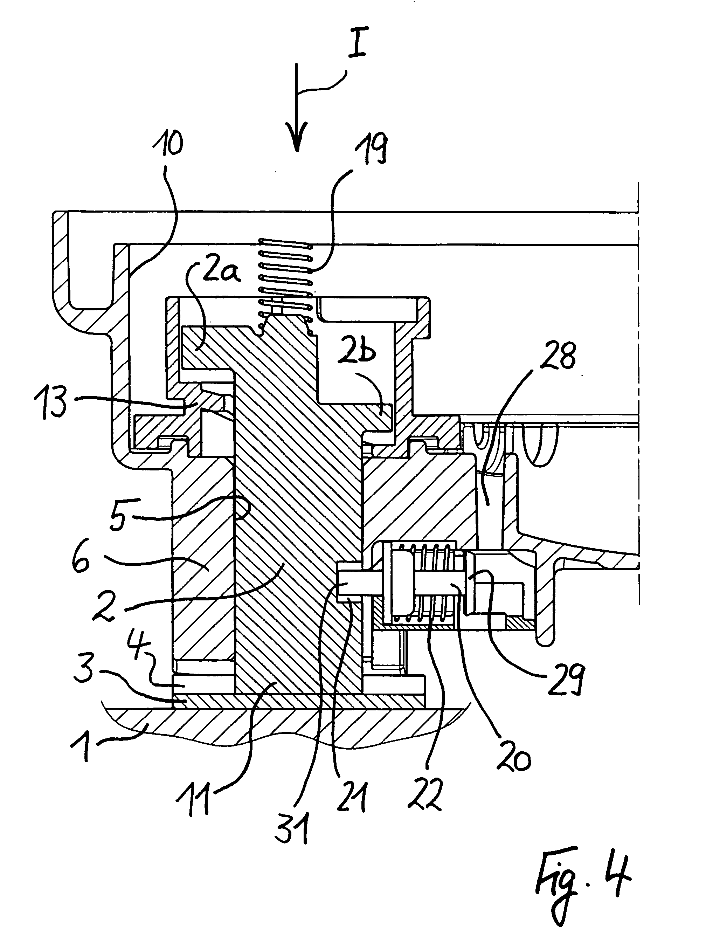

Der Sperrbolzen 2 ist zwischen der aus Fig. 3 und 4 ersichtlichen Sperrstellung, in welcher er mit seinem der Lenkspindel 1 benachbarten Ende 11 in eine Sperrnut 4 der Sperrhülse 3 eingreift, so daß die Lenkspindel 1 nicht mehr gedreht werden kann, und der aus Fig. 2 ersichtlichen Freigabestellung hin- und herbewegbar, in welcher der Sperrbolzen 2 mit seinem Ende 11 in keine Sperrnut 4 der Sperrhülse 3 eingreift und die Lenkspindel 1 freigibt, so daß sie gedreht werden kann.

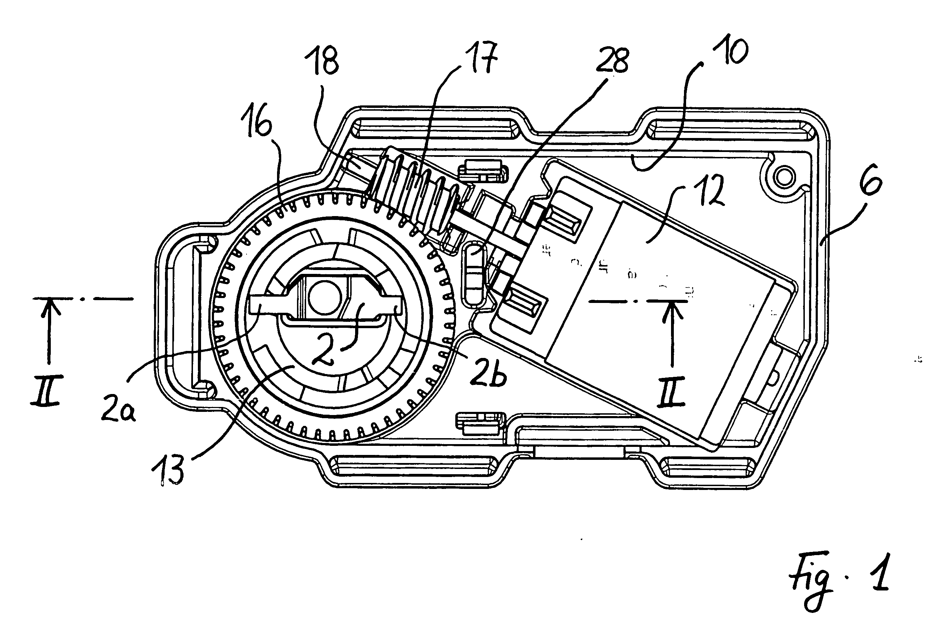

Zur Axialverschiebung des Sperrbolzens 2 in die Freigabestellung und in der entgegengesetzten Richtung in die Sperrstellung dient ein mittels eines Elektromotors 12 mit umkehrbarer Drehrichtung hin- und herdrehbares Steuerglied 13. Das Steuerglied 13 ist im wesentlichen koaxial zum Sperrbolzen 2 angeordnet, umgibt den Sperrbolzen 2 und ist im Gehäuse 6 um eine zur Längsachse 7 des Sperrbolzenkanals 5 parallele Achse zwischen einer zu dieser Achse koaxialen Ringfläche 14 des Gehäuses 6 und einem zu dieser Achse koaxialen Kranz von Innenvorsprüngen 15 am Verschlußdeckel 9 der Montageöffnung 10 des Gehäuses 6 drehbar gelagert. Das Steuerglied 13 ist als hülsenförmiges Schneckenrad mit einer Außenverzahnung 16 ausgebildet, in welche eine Antriebsschnecke 17 eingreift, die auf der Ausgangswelle 18 des Elektromotors 12 befestigt ist, wie aus Fig. 1 hervorgeht.

Der Sperrbolzen 2 ist mit zwei äußeren Vorsprüngen 2a, 2b versehen, mit welchen zwei innere Schrägflächen des Steuergliedes 13 zusammenwirken. Die beiden Schrägflächen weisen dieselbe Steigung auf und gehen jeweils an ihren beiden Enden in je eine Endfläche über, welche in einer zur Drehachse des Steuergliedes 13 senkrechten Ebene liegt. Zwischen dem Sperrbolzen 2 und dem Verschlußdeckel 9 der Montageöffnung 10 des Gehäuses 6 ist eine Schraubendruckfeder 19 angeordnet, welche die Vorsprünge 2a, 2b des Sperrbolzens 2 gegen die Schrägflächen und die Endflächen des Steuergliedes 13 drückt.

Wenn der Sperrbolzen 2 sich in der Sperrstellung befindet, dann liegen seine beiden Vorsprünge 2a, 2b jeweils der zugehörigen Endfläche des Steuergliedes 13 gegenüber, welche der Lenkspindel 1 näher ist. Wenn der Sperrbolzen 2 die Freigabstellung einnimmt, dann liegen seine beiden Vorsprünge 2a, 2b jeweils auf der zugehörigen Endfläche des Steuergliedes 13 auf, welche der Lenkspindel 1 ferner ist. Um den Sperrbolzen 2 entgegen der Wirkung der Schraubendruckfeder 19 aus der Sperrstellung axial in die Freigabestellung zu verschieben und unter der Wirkung der Schraubendruckfeder 19 aus der Freigabestellung axial in die Sperrstellung laufen zu lassen, wird der Elektromotor 12 eingeschaltet, so daß er das Steuerglied 13 im Uhrzeigersinn bzw. entgegen dem Uhrzeigersinn dreht und die beiden Vorsprünge 2a, 2b des Sperrbolzens 2 über die beiden Schrägflächen des Steuerglieds 13 von den beiden lenkspindelnahen Endflächen zu den beiden lenkspindelfernen Endflächen bzw. umgekehrt von den beiden lenkspindelfernen Endflächen zu den beiden lenkspindelnahen Endflächen des Steuergliedes 13 laufen.

Im Gehäuse 6 ist ein Sicherungsstift 20 zur Blockierung des Sperrbolzens 2 in seiner Sperrstellung bei gewaltsamer Entfernung des am Gehäuse 6 gefestigten Verschlußdeckels 9 für die Montageöffnung 10 des Gehäuses 6 axial verschieblich gelagert, der sich radial zur gemeinsamen Längsachse 7 des im Gehäuse 6 vorgesehenen Sperrbolzenkanals 5 und des Sperrbolzens 2 erstreckt, mit einer als Sackloch ausgebildeten seitlichen Vertiefung 21 des Sperrbolzens 2 zusammenwirkt, durch eine Schraubendruckfeder 22 in Richtung auf den Sperrbolzen 2 belastet ist und durch einen innen vom Verschlußdeckel 9 abstehenden, sich parallel zum Sperrbolzen 2 erstreckenden und vom Sperrbolzen 2 aus gesehen hinter der Schraubendruckfeder 22 am Sicherungsstift 20 angreifenden Rückhaltearm 23 entgegen der Wirkung der Schraubendruckfeder 22 abgestützt und in der Stellung gemäß Fig. 2 und 3 zurückgehalten wird, so daß er nicht in die Vertiefung 21 des Sperrbolzens 2 eindringen kann.

Der Sicherungsstift 20 erstreckt sich durch die Schraubendruckfeder 22 hindurch. Die Schraubendruckfeder 22 liegt mit ihrem sperrbolzenfernen Ende 24 an einer Ringschulter 25 des Gehäuses 6 und mit ihrem sperrbolzennahen Ende 26 an einem Ringvorsprung 27 des Sicherungsstiftes 20 an.

Der Rückhaltearm 23 des Verschlußdeckels 9 ist stabförmig ausgebildet und ragt durch eine entsprechend schachtförmig ausgebildeten Hohlraum 28 des Gehäuses 6 hindurch zum Sicherungsstift 20, um an dessen sperrbolzenfernem Ende 29 anzugreifen. Das sperrbolzenferne Ende 29 des Sicherungsstiftes 20 ist tellerförmig ausgebildet und wird vom freien Ende 30 des Rückhaltearmes 23 hintergriffen.

Wenn der Verschlußdeckel 9 für die Montageöffnung 10 vom Gehäuse 6 entfernt wird, während sich der Sperrbolzen 2 in der Sperrstellung gemäß Fig. 3 befindet, dann verläßt der am Verschlußdeckel 9 vorgesehene stabförmige Rückhaltearm 23 den schachtförmigen Hohlraum 28 des Gehäuses 6 und läuft das freie Ende 30 des Rückhaltearmes 23 hinter dem tellerförmigen sperrbolzenfernen Ende 29 des Sicherungsstiftes 20 weg, so daß die Schraubendruckfeder 22 den Sicherungsstift 20 mit seinem sperrbolzennahen Abschnitt 31 in die seitliche Vertiefung 21 des Sperrbolzens 2 schieben kann, welche auf den Sicherungsstift 20 ausgerichtet ist.

Es ergibt sich der Zustand gemäß Fig. 4, in welchem der Sperrbolzen 2 durch den Sicherungsstift 20 in seiner Sperrstellung blockiert ist und nicht bewegt werden kann, um mit seinem freien Ende 11 die Sperrnut 4 der Sperrhülse 3 zu verlassen, in welche der Sperrbolzen 2 mit dem Ende 11 eingreift. Das tellerförmige sperrbolzenferne Ende 29 des mit dem Abschnitt 31 in die sacklochförmige seitliche Vertiefung 21 des Sperrbolzens 2 eingreifenden Sicherungsstiftes 20 befindet sich vom Sperrbolzen 2 aus gesehen vor dem schachtförmigen Hohlraum 28 des Gehäuses 6 zur Aufnahme des stabförmigen Rückhaltearmes 23 und ist durch den freiliegenden Hohlraum 28 hindurch weder sichtbar noch zugänglich, um den Sicherungsstift 20 außer Eingriff mit der Vertiefung 21 des Sperrbolzens 2 zu bewegen und dessen Blockade aufzuheben.

## Patentansprüche

1. Vorrichtung zum Sperren der Lenkspindel (1) eines Kraftfahrzeugs gegen Drehen mittels eines in einem Gehäuse (6) zwischen einer Sperrstellung und einer Freigabestellung axial hin- und herbewegbaren Sperrbolzens (2), welcher in der Sperrstellung mittels eines mit einer seitlichen Vertiefung (21) des Sperrbolzens (2) zusammenwirkenden, im Gehäuse (6) axial verschieblich gelagerten, federbelasteten Sicherungsstiftes (20) bei Entfernung eines mit einem Arm (23) zum Rückhalten des Sicherungsstiftes (20) entgegen der Wirkung seiner Federbelastung versehenen Teils des Gehäuses (6) und Freigabe des Sicherungsstiftes (20) durch den Rückhaltearm (23) blockierbar ist, **dadurch gekennzeichnet, daß** der Rückhaltearm (23) vom Sperrbolzen (2) aus gesehen hinter der den Sicherungsstift (20) belastenden Feder (22) am Sicherungsstift (20) angreift und das sperrbolzenferne Ende (29) des Sicherungsstiftes (20) sich beim Eingriff des Sicherungsstiftes (20) in die Vertiefung (21) des Sperrbolzens (2) vom Sperrbolzen (2) aus gesehen vor dem Hohlraum (28) des Gehäuses (6) zur Aufnahme des Rückhaltearmes (23) befindet und durch den dann freiliegenden Hohlraum (28) hindurch nicht sichtbar und nicht zugänglich ist.

2. Vorrichtung nach Anspruch 1, **dadurch gekennzeichnet, daß** der Rückhaltearm (23) sich parallel zum Sperrbolzen (2) erstreckt.

3. Vorrichtung nach Anspruch 1 oder 2, **dadurch gekennzeichnet, daß** der Rückhaltearm (23) an einem Verschlußdeckel (9) für eine Montageöffnung (10) des Gehäuses (6) vorgesehen ist.

4. Vorrichtung nach Anspruch 3, **dadurch gekennzeichnet, daß** die Montageöffnung (10) auf der der Lenkspindel (1) abgewandten Seite des Gehäuses (6) vorgesehen ist.

5. Vorrichtung nach einem der vorstehenden Ansprüche, **dadurch gekennzeichnet, daß** der Rückhaltearm (23) stabförmig ausgebildet ist und durch den entsprechend schachtförmig ausgebildeten Hohlraum (28) hindurch zum Sicherungsstift (20) ragt.

6. Vorrichtung nach einem der vorstehenden Ansprüche, **dadurch gekennzeichnet, daß** der Rückhaltearm (23) am sperrbolzenfernen Ende (29) des Sicherungsstiftes (20) angreift.

7. Vorrichtung nach Anspruch 6, **dadurch gekennzeichnet, daß** das sperrbolzenferne Ende (29) des Sicherungsstiftes (20) tellerförmig ausgebildet ist und vom freien Ende (30) des Rückhaltearmes (23) hintergriffen wird.

8. Vorrichtung nach einem der vorstehenden Ansprüche, **dadurch gekennzeichnet, daß** der Sicherungsstift (20) durch eine Schraubendruckfeder (22) belastetet ist, durch welche hindurch sich der Sicherungsstift (20) erstreckt und welche sich mit ihrem sperrbolzenfernen Ende (24) an einer Ringschulter (25) des Gehäuses (6) und mit ihrem sperrbolzennahen Ende (26) an einem Ringvorsprung (27) des Sicherungsstiftes (20) abstützt.

9. Vorrichtung nach einem der vorstehenden Ansprüche, **dadurch gekennzeichnet, daß** der Sicherungsstift (20) sich radial zur Längsachse (7) des Sperrbolzens (2) erstreckt.

10. Vorrichtung nach Anspruch 9, **dadurch gekennzeichnet, daß** die seitliche Vertiefung (21) des Sperrbolzens (2) als Sackloch ausgebildet ist.

## Claims

1. Device for locking the steering spindle (1) of a motor vehicle against rotation by means of a locking bolt (2) axially displaceable within a housing (6) between a locked position and a release position, wherein the locking bolt (2) can be fixed in its locked position by a spring-loaded securing pin (20), which is axially displaceable inside the housing (6) in order to cooperate with a lateral recess (21) of the locking bolt (2) upon the removal of a part of the housing (6), which is fitted with an arm (23) normally retaining the securing pin (20) against the force of its spring loading, and upon the release of the securing pin (20) by the retaining arm (23),
**characterised in that**,
viewed from the locking bolt (2), the retaining arm (23) engages the securing pin (20) behind the spring (22), which loads the securing pin (20), and that, upon the engagement of the securing pin (20) in the recess (21) of the locking bolt (2), when viewed from the locking bolt (2), the end (29) of the securing pin (20) remote from the locking bolt (2) is disposed in front of the cavity (28) of the housing (6), which normally receives the retaining arm (23), and cannot therefore be seen and is inaccessible through the open cavity (28).

2. Device according to claim 1,
**characterised in that**
the retaining arm (23) extends parallel to the locking bolt (2).

3. Device according to claim 1 or 2,
**characterised in that**
the retaining arm (23) is provided on a sealing lid (9) for an assembly aperture (10) of the housing (6).

4. Device according to claim 3,
**characterised in that**
the assembly aperture (10) is provided at the side of the housing (6) facing away from the steering spindle (1).

5. Device according to any one of the preceding claims,
**characterised in that**
the retaining arm (23) is designed in the shape of a bar and projects through the correspondingly shaft-shaped cavity (28) to the securing pin (20).

6. Device according to any one of the preceding claims,
**characterised in that**
the retaining arm (23) engages with the end (29) of the securing pin (20) remote from the locking bolt (2).

7. Device according to claim 6,
**characterised in that**
the end (29) of the securing pin (20) remote from the locking bolt (2) is radially flanged, i.e., has the shape of a disk and is engaged at the side facing its direction of locking motion by the free end (30) of the retaining arm (23).

8. Device according to any one of the preceding claims, **characterised in that**
the securing pin (20) is spring-loaded by means of a helical compression spring (22), through which the securing pin (20) extends and which is supported at its end (24) remote from the locking bolt (2) against an annular shoulder (25) of the housing (6) and at its end (26) near to the locking bolt (2) against an annular projection (27) of the securing pin (20).

9. Device according to any one of the preceding claims, **characterised in that**
the securing pin (20) extends radially to the longitudinal axis (7) of the locking bolt (2).

10. Device according to claim 9,
**characterised in that**
the lateral recess (21) of the locking bolt (2) is designed as a blind hole.

## Revendications

1. Dispositif pour le verrouillage de la colonne de direction (1) d'un véhicule à moteur pour empêcher sa rotation au moyen d'un goujon de verrouillage (2) mobile en va-et-vient dans le sens axial dans un boîtier (6) entre une position de verrouillage et une position de déverrouillage, qui peut être bloqué dans la position de verrouillage au moyen d'une goupille de fixation (20) contrainte par ressort, coopérant avec un renfoncement latéral (21) du goujon de verrouillage (2) et mobile dans le sens axial dans le boîtier (6) lors du enlèvement d'une partie du boîtier (6) pourvue d'un bras (23) destiné à retenir la goupille de fixation (20) contre l'action de sa contrainte par ressort et de la libération de la goupille de fixation (20) par le bras de retenue (23), **caractérisé en ce que** le bras de retenue (23) se met en prise sur la goupille de fixation (20), vu depuis le goujon de verrouillage (2), derrière le ressort (22) contraignant la goupille de fixation (20) et l'extrémité (29) de la goupille de fixation (20) éloignée du goujon de verrouillage se trouve, lorsque la goupille de fixation (20) est en prise dans le renfoncement (21) du goujon de verrouillage (2), vue depuis le goujon de verrouillage (2), devant la cavité (28) du boîtier (6) destinée à recevoir le bras de retenue (23), et n'est pas visible ni accessible à travers la cavité (28) qui est alors exposée.

2. Dispositif selon la revendication 1, **caractérisé en ce que** le bras de retenue (23) s'étend parallèlement au goujon de verrouillage (2).

3. Dispositif selon la revendication 1 ou 2, **caractérisé en ce que** le bras de retenue (23) est prévu sur un couvercle d'obturation (9) pour une ouverture de montage (10) du boîtier (6).

4. Dispositif selon la revendication 3, **caractérisé en ce que** l'ouverture de montage (10) est prévue du côté du boîtier (6) orienté à l'opposé de la colonne de direction (1).

5. Dispositif selon l'une quelconque des revendications précédentes, **caractérisé en ce que** le bras de retenue (23) est en forme de barre et dépasse jusqu'à la goupille de fixation (20) à travers la cavité (28) en forme de gaine de forme correspondante.

6. Dispositif selon l'une quelconque des revendications précédentes, **caractérisé en ce que** le bras de retenue (23) se met en prise sur l'extrémité (29) de la goupille de fixation (20) éloignée du goujon de verrouillage.

7. Dispositif selon la revendication 6, **caractérisé en ce que** l'extrémité (29) de la goupille de fixation (20) éloignée du goujon de verrouillage est en forme de disque et est saisie par l'arrière par l'extrémité libre (30) du bras de retenue (23).

8. Dispositif selon l'une quelconque des revendications précédentes, **caractérisé en ce que** la goupille de fixation (20) est contrainte par un ressort hélicoïdal de compression (22), à travers lequel la goupille de fixation (20) s'étend et qui s'appuie par son extrémité (24) éloignée du goujon de verrouillage sur un épaulement annulaire (25) du boîtier (6) et par son extrémité (26) proche du goujon de verrouillage sur une saillie annulaire (27) de la goupille de fixation (20).

9. Dispositif selon l'une quelconque des revendications précédentes, **caractérisé en ce que** la goupille de fixation (20) s'étend dans le sens radial par rapport à l'axe longitudinal (7) du goujon de verrouillage (2).

10. Dispositif selon la revendication 9, **caractérisé en ce que** le renfoncement latéral (21) du goujon de verrouillage (2) est conformé comme un trou borgne.
